# DEMANDE DE BREVET EUROPEEN

(11) **EP 4 663 518 A1**
(43) Date de publication de la demande: **17.12.2025**
(21) Numéro de dépôt: 25171058.8
(22) Date de dépôt: 16.04.2025
(51) Int. Cl.: B62D 21/15, B62D 25/04

(54) **RENFORT DE MONTANT DE BAIE**

(30) Priorité: 13.06.2024 FR 2406261
(71) Demandeur: Stellantis Auto SAS, 78300 Poissy (FR)
(72) Inventeur: HERMEN, Frédéric, 25200 MONTBELIARD (FR)
(74) Mandataire: BCIP

(57) **Abrégé**

L'invention concerne un renfort (1) de montant, pour un montant de baie d'une caisse, le renfort (1) en tôle emboutie s'étendant suivant une ligne longitudinale (LL) et présentant une zone d'accostage (5) d'un pied milieu, le renfort (1) présentant une première surface (6) délimitée par une première (7) et une deuxième (8) carres, délimitant le renfort (1) selon la ligne longitudinale (LL) entre la première surface (6) et respectivement un premier (9) et un deuxième (10) prolongements, le renfort (1) présentant une zone de renforcement (11) distante de la zone d'accostage (5) et délimitée un premier embouti (12), disposé dans le premier prolongement (9) et s'étendant suivant la ligne longitudinale (LL), et un deuxième embouti (13) disposé dans le deuxième prolongement (10) incliné par rapport à la ligne longitudinale (LL), la zone de renforcement (11) étant conçue pour contenir une déformation dans la zone de renforcement (11).

## Description

Le domaine technique concerne les renforts de montant de baie, les montants de baie formés à partir d'un tel renfort de baie, les caisses de véhicule comprenant au moins un tel montant de baie et les véhicules automobiles présentant une telle caisse.

Afin de garantir la sécurité des passagers, les véhicules sont soumis à diverses procédures normalisées de simulations de chocs contre un obstacle rigide impactant le véhicule. Les procédures normalisées sont, par exemple, décrites par l'administration nationale américaine de la sécurité routière (NHTSA), qui est responsable de la sécurité routière et de la réglementation des véhicules ou par l'organisme international Euro NCAP.

L'une de ces procédures consiste notamment en une simulation de chocs contre un poteau rigide impactant le véhicule sur le côté, au niveau des portières des passagers, dénommée choc latéral contre un poteau ou encore choc latéral. Dans un choc latéral, les déformations subies par le véhicule sont particulièrement étudiées afin de minimiser l'intrusion du poteau dans l'espace protégé autour des passagers.

En outre, le développement récent des véhicules électriques impose de nouvelles contraintes liées, d'une part, à l'augmentation de la masse des véhicules (de l'ordre de 600 kg en moyenne) inhérente à la masse des batteries embarquées et, d'autre part, à la nécessité de renforcer la structure afin de protéger les batteries contre les impacts et déformations. Ainsi, il a été constaté qu'une version à motorisation électrique d'un véhicule est susceptible de subir des déformations structurelles inhabituelles et plus importantes, lors d'un choc latéral, que la structure correspondante de la version à motorisation thermique.

Dans ce contexte, les déformations des montants de baie et des pieds d'une structure de véhicule doivent être contrôlées avec précision pour préserver l'intégrité de l'habitacle, tout en préservant la légèreté de ces structures.

Habituellement les montants sont constitués de corps creux présentant une face intérieure appelée doublure et d'une face extérieure appelée renfort. Dans une structure de véhicule classique, le pied milieu est fixé en appui sur un renfort. Un tel assemblage provoque une rupture d'inertie entre les zones d'assemblage et les zones environnantes, puisque dans les zones d'assemblage le moment quadratique de flexion est très supérieur à celui des zones environnantes du montant de baie. Une telle rupture d'inertie est alors susceptible de provoquer un pli à l'emplacement de l'accostage du pied milieu et d'engendrer une rupture du montant de baie en cas de choc latéral, ou du moins de causer une intrusion trop importante dans l'habitacle. Afin de renforcer les montants, il n'est pas souhaitable d'ajouter des pièces de renfort, en particulier pour préserver la masse globale du véhicule et les coûts de production.

Ainsi, il existe un besoin d'une solution permettant d'obtenir un montant de baie dépourvu de pièce de renfort additionnelle présentant une déformation contrôlée en cas de choc latéral.

La présente invention a pour objet de pallier les problèmes exposés précédemment. Dans ce contexte technique, un but de la présente invention est de fournir un renfort de montant permettant d'éviter la formation de pli en cas de choc latéral et permettant de former un montant de baie à déformations contrôlées en cas de choc latéral.

A cet effet, la présente invention se rapporte à un renfort de montant conçu pour former, avec une doublure de montant, un montant de baie d'une caisse d'un véhicule automobile, le renfort étant formé d'une tôle emboutie s'étendant suivant une ligne longitudinale, le renfort présentant une zone d'accostage conçue pour permettre l'accostage et la fixation d'un pied milieu sur le renfort, le renfort présentant au moins une première surface délimitée par une première et une deuxième carres s'étendant chacune le long de la ligne longitudinale, les première et deuxième carres délimitant chacune le renfort entre la première surface et respectivement un premier et un deuxième prolongements opposés, chacun incliné par rapport à la première surface, le renfort présentant une zone de renforcement distante de la zone d'accostage et délimitée, suivant la ligne longitudinale, par, d'une part, un premier embouti disposé au moins en partie dans le premier prolongement et s'étendant suivant la ligne longitudinale, et, d'autre part, un deuxième embouti disposé au moins en partie dans le deuxième prolongement et s'étendant suivant un plan incliné par rapport à la ligne longitudinale, la zone de renforcement étant conçue pour contenir une déformation du renfort dans la zone de renforcement lors d'un choc latéral subi par le véhicule.

L'invention concerne également un montant de baie comprenant un renfort de montant selon l'invention assemblé sur une doublure de montant.

L'invention concerne encore une caisse d'un véhicule automobile comprenant au moins un montant de baie selon l'invention et au moins un pied milieu, chaque pied milieu étant fixé sur une zone d'accostage d'un renfort d'un montant de baie.

L'invention concerne enfin un véhicule automobile présentant une caisse selon l'invention.

Ainsi, le renfort de montant selon l'invention permet de former, avec doublure de montant, un montant de baie selon l'invention présentant une déformation contrôlée en cas de choc latéral. En particulier, la zone de renforcement du renfort permet de contenir les déformations subies par le montant en évitant la propagation des déformations en feuillure. Le premier embouti de la zone de renforcement permet de contrôler la localisation de la déformation, tandis que le deuxième embouti permet de limiter la propagation des déformations. Ainsi, le renfort de montant selon l'invention permet d'obtenir un montant de baie dépourvu de pièce de renfort additionnelle, tout en garantissant une protection adéquate de l'habitacle lors d'un choc latéral.

Selon un mode de réalisation, la zone de renforcement comporte en outre un ajourage ménagé dans le deuxième prolongement.

Selon une possibilité du renfort de montant, le premier embouti interrompt la première carre.

Selon un mode de réalisation du renfort de montant, le deuxième embouti s'étend depuis la deuxième carre en travers du deuxième prolongement.

Avantageusement, le premier embouti forme une surface concave lorsque le renfort est assemblé en montant de baie.

Selon un mode de réalisation du renfort de montant, le premier embouti présente une longueur suivant la ligne longitudinale supérieure à la distance, mesurée suivant la ligne longitudinale, entre la zone d'accostage et la zone de renforcement.

Selon une possibilité du renfort de montant, le deuxième embouti forme une rainure présentant une largeur, mesurée suivant la ligne longitudinale, sensiblement égale au diamètre de l'ajourage.

L'invention sera mieux comprise à la lecture de la description détaillée qui va suivre, donnée uniquement à titre d'exemple non limitatif et faite en se référant aux dessins annexés sur lesquels :
[Fig. 1] la figure 1 représente une vue en coupe transversale d'un montant de baie selon l'invention ;
[Fig. 2] la figure 2 représente une vue en perspective d'une zone de renforcement du renfort de montant mis en œuvre dans le montant de baie de la figure 1 ;
[Fig. 3] la figure 3 représente une vue de détails du deuxième prolongement du renfort de la figure 2 ;

Dans ces figures, les mêmes références sont utilisées pour désigner les mêmes éléments.

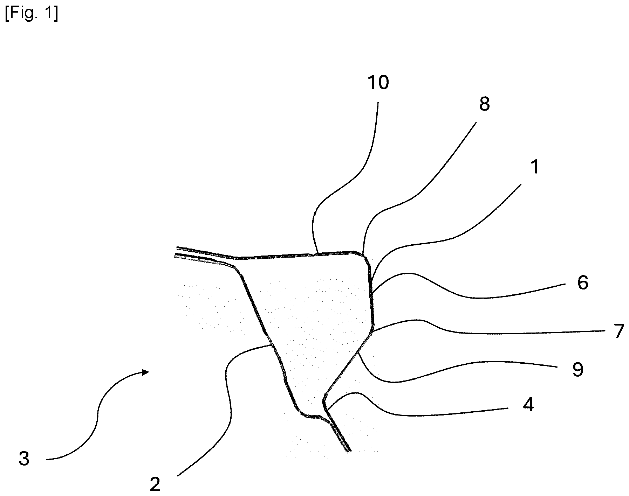

Un renfort 1 de montant selon l'invention, illustré sur les figures, est conçu pour former, avec une doublure 2 de montant, un montant 3 de baie d'une caisse d'un véhicule automobile, illustrés sur la figure 1.

Le renfort 1 est formé d'une tôle 4 emboutie s'étendant suivant une ligne longitudinale LL.

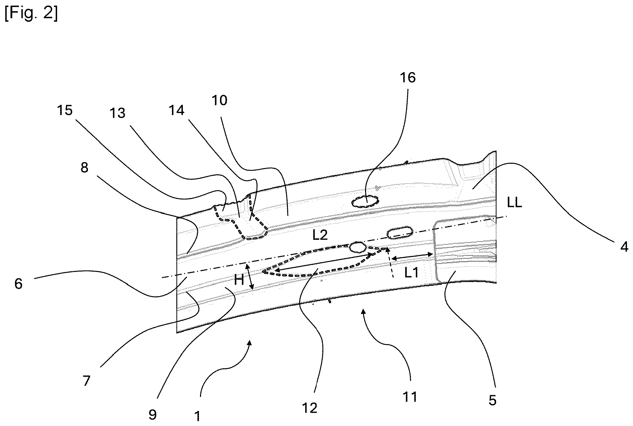

Comme illustré sur la figure 2, le renfort 1 présente une zone d'accostage 5 conçue pour permettre l'accostage et la fixation d'un pied milieu, non illustré, sur le renfort 1 de montant.

La caisse selon l'invention présente ainsi au moins un montant 3 de baie selon l'invention et un pied milieu fixé sur chaque zone d'accostage 5.

Comme le montre la figure 2, le renfort 1 présente au moins une première surface 6 délimitée par une première 7 et une deuxième 8 carres s'étendant chacune le long de la ligne longitudinale LL. Les première 7 et deuxième 8 carres sont destinées à former chacune, lorsque le renfort 1 est assemblé en montant 3 de baie, une voie d'efforts participant à la dissipation d'une énergie libérée lors d'un choc latéral subi par le véhicule et transmise au montant 3 de baie. Les première 7 et deuxième 8 carres délimitent chacune le renfort 1 entre la première surface 6 et respectivement un premier 9 et un deuxième 10 prolongements opposés, chacun incliné par rapport à la première surface 6. Dans une caisse selon l'invention comprenant au moins un montant 3 de baie, chaque première surface 6 s'étend sensiblement suivant un plan vertical. Dans l'exemple illustré sur la figure 1, le premier prolongement 9 est incliné par rapport au plan vertical du véhicule selon l'invention, tandis que le deuxième prolongement 10 s'étendant sensiblement suivant un plan horizontal du véhicule.

Le renfort 1 présente une zone de renforcement 11, distante de la zone d'accostage 5 et délimitée, suivant la ligne longitudinale LL, par un premier 12 et un deuxième 13 emboutis. La zone de renforcement 11 est conçue pour contenir une déformation du renfort 1 dans la zone de renforcement 11, lors d'un choc latéral subi par le véhicule.

Le premier embouti 12 est disposé au moins en partie dans le premier prolongement 9 et s'étend suivant la ligne longitudinale LL. Le premier embouti 12 présente, par exemple, une forme allongée suivant la ligne longitudinale LL et forme une surface concave extérieure du montant 3 de baie. Dans l'exemple illustré sur la figure 2, le premier embouti 12 interrompt la première carre 7. Dans le mode de réalisation illustré sur les figures, le premier embouti 12 présente une longueur L2, mesurée suivant la ligne longitudinale LL supérieure à la distance L1, mesurée suivant la ligne longitudinale LL, entre la zone d'accostage 5 et la zone de renforcement 11. A titre d'exemple, la distance L1 est de l'ordre de 40 mm. Par exemple, le premier embouti 12 présente une hauteur H, mesurée suivant une direction orthogonale à la ligne longitudinale LL, comprise entre 30 % et 60% de sa longueur L2. Le premier embouti 12 permet de contrôler la localisation des déformations subies par le renfort 1 en cas de choc latéral subi par le véhicule.

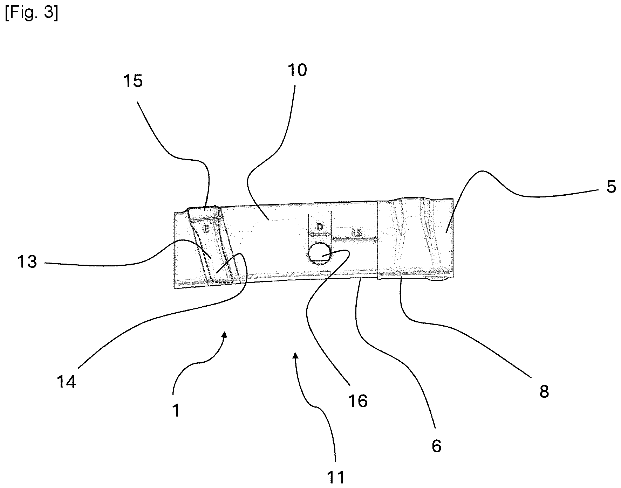

Le deuxième embouti 13 est disposé au moins en partie dans le deuxième prolongement 10 et s'étend suivant un plan incliné par rapport à la ligne longitudinale LL. Comme illustré sur la figure 3, le deuxième embouti 13 s'étend, par exemple, depuis la deuxième carre 8 en travers du deuxième prolongement 10. A titre d'exemple, le deuxième embouti 13 forme une rainure 14, illustrée sur la figure 3. La rainure 14 présente, par exemple, une extrémité élargie 15. Le deuxième embouti 13 permet de contrôler la propagation des déformations subies par le renfort 1, afin de limiter ou d'éviter la propagation suivant la ligne longitudinale LL.

Afin de contenir de manière plus efficace les déformations à la zone de renforcement 11 dues à un choc latéral, la zone de renforcement 11 comporte en outre un ajourage 16 ménagé dans le deuxième prolongement 10. Un tel ajourage 16 présente, par exemple, un diamètre D compris entre 20 mm et 30 mm. L'ajourage 16 est situé à une distance L3 sensiblement égale à la distance L1 séparant la zone d'accostage 5 et la zone de renforcement 11.

Par exemple, la rainure 14 présente une largeur maximale E, mesurée suivant la ligne longitudinale LL, sensiblement égale au diamètre D de l'ajourage 16.

L'ajourage 16 permet, comme la rainure 14, de contrôler la propagation de déformations subies par la zone de renforcement 11 en cas de choc latéral. En particulier, le deuxième embouti 13 et l'ajourage 16 empêchent la propagation de déformations en dehors de la zone de renforcement 11.

Ainsi, le renfort 1 de permet de former, avec la doublure 2 de montant, le montant 3 de baie qui présente une déformation contrôlée en cas de choc latéral. En particulier, la zone de renforcement 11 permet de contenir les déformations subies par le montant 3 en évitant la propagation des déformations en feuillure. Le premier embouti 12 de la zone de renforcement 11 permet de contrôler la localisation des déformations, tandis que le deuxième embouti 13 permet de limiter la propagation des déformations. Ainsi, le renfort 1 de montant est dépourvu de pièce de renfort additionnelle tout en garantissant une protection adéquate de l'habitacle lors d'un choc latéral.

L'invention ne se limite pas au mode de réalisation du renfort de montant décrit ci-avant, seulement à titre d'exemple, mais d'autres modes de réalisation peuvent être conçus par l'homme de métier sans sortir du cadre et de la portée de la présente invention.

## Revendications

1. Renfort (1) de montant conçu pour former, avec une doublure (2) de montant, un montant (3) de baie d'une caisse d'un véhicule automobile, le renfort (1) étant formé d'une tôle (4) emboutie s'étendant suivant une ligne longitudinale (LL), le renfort (1) présentant une zone d'accostage (5) conçue pour permettre l'accostage et la fixation d'un pied milieu sur le renfort (1), le renfort (1) présentant au moins une première surface (6) délimitée par une première (7) et une deuxième (8) carres s'étendant chacune le long de la ligne longitudinale (LL), les première (7) et deuxième (8) carres délimitant chacune le renfort (1) entre la première surface (6) et respectivement un premier (9) et un deuxième (10) prolongements opposés, chacun incliné par rapport à la première surface (6), le renfort (1) présentant une zone de renforcement (11) distante de la zone d'accostage (5) et délimitée, suivant la ligne longitudinale (LL), par, d'une part, un premier embouti (12) disposé au moins en partie dans le premier prolongement (9) et s'étendant suivant la ligne longitudinale (LL), et, d'autre part, un deuxième embouti (13) disposé au moins en partie dans le deuxième prolongement (10) et s'étendant suivant un plan incliné par rapport à la ligne longitudinale (LL), la zone de renforcement (11) étant conçue pour contenir une déformation du renfort (1) dans la zone de renforcement (11) lors d'un choc latéral subi par le véhicule.

2. Renfort (1) de montant selon la revendication 1, **caractérisé en ce que** la zone de renforcement (11) comporte en outre un ajourage (16) ménagé dans le deuxième prolongement (10).

3. Renfort (1) de montant selon la revendication 2, **caractérisé en ce que** le deuxième embouti (13) forme une rainure (14) présentant une largeur (E), mesurée suivant la ligne longitudinale (LL), sensiblement égale au diamètre (D) de l'ajourage (16).

4. Renfort (1) de montant selon l'une des revendications 1 à 3, **caractérisé en ce que** le premier embouti (12) interrompt la première carre (7).

5. Renfort (1) de montant selon l'une des revendications 1 à 4, **caractérisé en ce que** le deuxième embouti (13) s'étend depuis la deuxième carre (8) en travers du deuxième prolongement (10).

6. Renfort (1) de montant selon l'une des revendications 1 à 5, **caractérisé en ce que** le premier embouti (12) forme une surface concave lorsque le renfort (1) est assemblé en montant (3) de baie.

7. Renfort (1) de montant selon l'une des revendications 1 à 6, **caractérisé en ce que** le premier embouti (12) présente une longueur (L2) suivant la ligne longitudinale (LL) supérieure à la distance (L1), mesurée suivant la ligne longitudinale (LL), entre la zone d'accostage (5) et la zone de renforcement (11).

8. Montant (3) de baie comprenant un renfort (1) de montant selon l'une des revendications 1 à 7 assemblé sur une doublure (2) de montant.

9. Caisse d'un véhicule automobile comprenant au moins un montant (3) de baie selon la revendication 8 et au moins un pied milieu, chaque pied milieu étant fixé sur une zone d'accostage (5) d'un renfort (1) d'un montant (3) de baie.

10. Véhicule automobile présentant une caisse selon la revendication 9.
